# EUROPEAN PATENT SPECIFICATION

(11) **EP 0 788 098 B1**
(45) Date of publication and mention of the grant of the patent: **18.09.2002**
(21) Application number: 97300530.9
(22) Date of filing: 28.01.1997
(51) Int. Cl.: G11B 11/00, G11B 7/09, G11B 11/10

(54) **Magneto-optical disk focus and tracking servo device**
Servovorrichtung zum Fokussieren und Verfolgen der Spurlage für eine magnetoptische Platte
Dispositif d'asservissement de la focalisation et du suivi de piste de disque magnétooptique

(30) Priority: 01.02.1996 KR 9602450
(43) Date of publication of application: 06.08.1997
(73) Proprietor: Samsung Electronics Co., Ltd., Suwon City, Kyungki-do (KR)
(72) Inventor: Hwangbo, Min, Anyang-city, Kyungki-do (KR)
(74) Representative: Neill, Alastair William

(56) References cited:
- DE-A- 4 041 302
- US-A- 5 097 458
- PATENT ABSTRACTS OF JAPAN vol. 17, no. 536 (P-1620), 27 September 1993 & JP 05 144024 A (KONICA CORP.), 11 June 1993,
- PATENT ABSTRACTS OF JAPAN vol. 17, no. 408 (P-1582), 29 July 1993 & JP 05 073982 A (SHARP CORP.), 26 March 1993,

## Description

The present invention relates to a magnetooptical disk servo device, and more particularly, to a focus servo and a tracking servo for a magnetooptical disk, which is stable with a changing amount of detected light, and which makes various servo control gains uniform, even when the received quantity of light at a photo detecting portion changes, and a magnetooptical disk servo device using the same.

Generally, when the received quantity of light of a photodiode at the photo detecting portion changes, the servo device of the magnetooptical disk can become unstable since the entire gain of the servo device is affected, thus the control system can become unstable. In particular, when the change in the quantity of light received is severe, the servo device can oscillate.

JP-A-5073982 discloses a magneto optical disk focus servo device which performs a focus servo control using a focus error signal operated by an output of a photo detecting portion including a plurality of photodiodes, the device comprising: an operator for outputting a sum signal by adding signals corresponding to the amount of light detected in at least two photodiodes among said plurality of photodiodes of said photo detecting portion, a divider for dividing focus error by said sum signal and a focus servo for controlling a focus actuator with the output of said divider to thereby cause a change in gain of the servo device.

DE-A-4041302 discloses a magnetooptical disk tracking servo device using a tracking error signal operated by an output of a photo detecting portion including a plurality of photodiodes, the device comprising: an operator for outputting a sum signal by adding signals corresponding to the amount of light detected in at least two photodiodes among the plurality of photodiodes of said photo detecting portion; a divider for dividing said tracking error signal; by said sum signal; and a tracking servo for controlling a track actuator with the output of said divider, to thereby reduce a change in the gain of the servo device.

JP-A-5144024 discloses a servo mechanism for an optical disk device where the photo detected signals are added by an operator to a sum which divides the focus error signal as well as the tracking error signal by means of dividers.

However, the dividers are before the gain amplifiers.

US-A-5097458 discloses a servo control system for an optical disk device which comprises a unit for scanning an optical disk by an optical spot converged and irradiated on the disk; a unit for feed back controlling position of the optical spot in a focusing direction; and a unit for feed back controlling position of the optical spot in a tracking direction. The system further comprises: a first and second optical detectors, each being divided to at least two detection areas; a multiplexer to which the detection areas are connected for time sharing the detection signals; an adder for adding up the detection signals output from one of the detectors; and A/D converter which converts the time shared signal output from the multiplexer to a digital signal using the added up signal as a reference thereof; and a logic circuit which is connected to the A/D converter and calculates from the digital signal output from the A/D converter to obtain digital error signals of focus and track.

It is an aim of preferred embodiments of the present invention to provide a magnetooptical disk focus servo, which is stable with changing quantities of light, and which makes the servo control gain uniform, even when the quantity of light detected at a photo detecting portion changes.

According to the present invention in a first aspect, there is provided a magnetooptical disk servo device, which is stable with changing amounts of light detected, and which performs a focus servo control using a focus error signal operated on by an output of a first photo detecting portion (301) including a plurality of photodiodes (A-D) the device comprising:
an operator (304) for outputting a sum signal by adding signals corresponding to the amount of light detected in at least two photodiodes among said plurality of photodiodes of said first photo detecting portion and for outputting a tracking error signal by subtracting signals corresponding to the amount of light detected in at least two photodiodes α, β of a second photo detecting system (302);
a first divider (308) for dividing said focus error signal by said sum signal; and
a focus servo (310, 311, 312) for controlling a focus actuator (313) with the output of said divider (308);
a second divider (317) for dividing said tracking error signal by said sum signal; and
a tracking servo (319, 320, 321) for controlling a tracking actuator (322) with the output of said divider (317); characterised in that there is included
a first gain controller (306) for controlling the gain of the focus error signal before dividing the focus error signal in the first divider, and
a second gain controller (315) for controlling the gain of the tracking error signal before dividing the tracking error signal in the second divider.

It is another aim of preferred embodiments of the present invention to provide a magnetooptical disk tracking servo, which is stable with changing quantities of light, and which makes the servo control gain uniform, even when the quantity of light detected at a photo detecting portion changes.

It is still another aim of preferred embodiments of the present invention to provide a magnetooptical disk servo device, which is stable with changing quantities of light, and which makes the servo control gain uniform, even when the quantity of light detected at a photo detecting portion changes.

Other features of the present invention are set out in the appended claims.

The present invention will become more apparent by describing in detail preferred embodiments thereof, by way of example only, with reference to the attached drawings in which:
Figure 1 is a block diagram schematically illustrating a magnetooptical disk focus servo, which is stable with changing quantities of light;
Figure 2 is a block diagram schematically illustrating a magnetooptical disk tracking servo, which is stable with changing quantities of light; and
Figure 3 is a block diagram schematically illustrating a magnetooptical disk servo device, which is stable with changing quantities of light, according to the present invention.

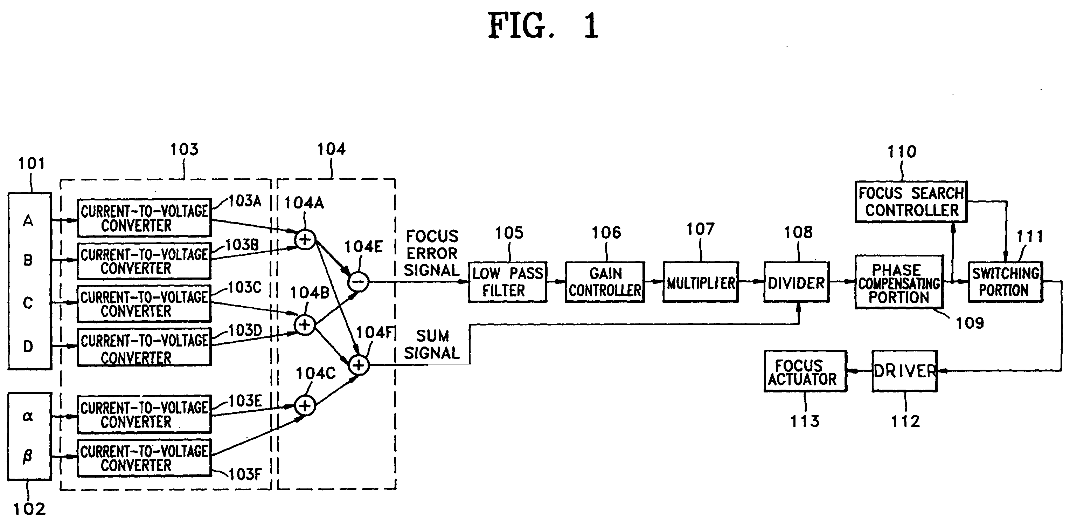

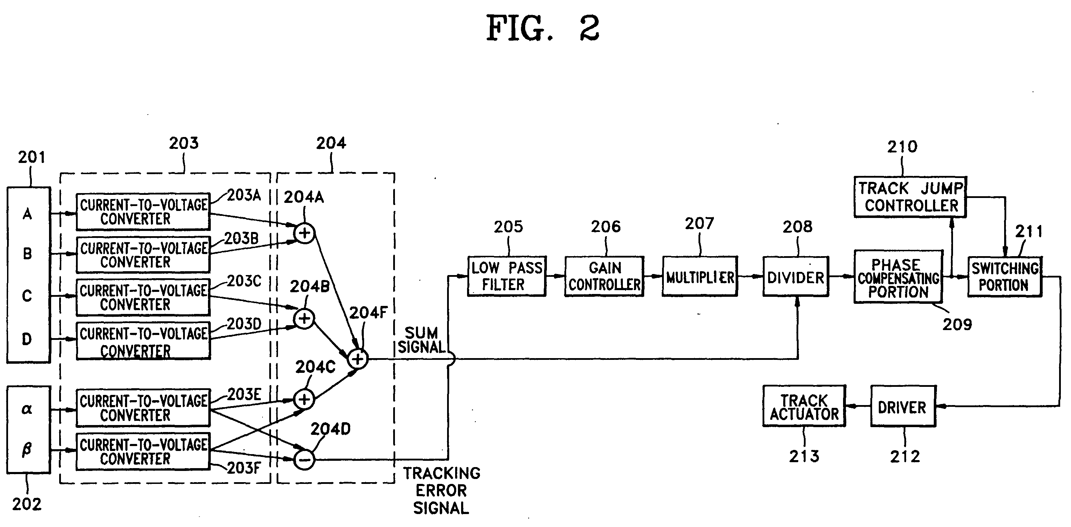

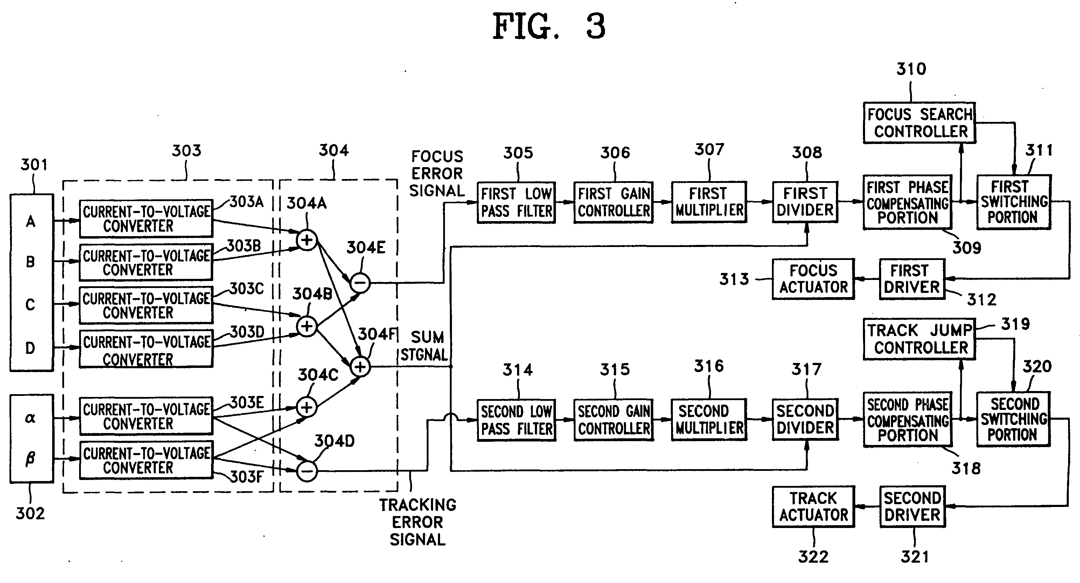

The Figure 1 and 2 block diagrams are included for purposes of clarity of disclosure. Only the Figure 3 block diagram describes a device within the scope of the appended claims.

In Figure 1 schematically illustrating a magnetooptical disk focus servo, which is stable with changing quantities of light the focus servo includes a first photo detecting portion 101 having at least two sets of photodiodes (A-D) for detecting an optical signal required for operating a sum signal and a focus error signal, a second photo detecting portion 102 having at least two sets of photodiodes (α and β) for detecting the optical signal required for operating the sum signal, a current-voltage converter portion 103 for converting the input currents into voltages, an operator 104 for calculating the focus error signal and the sum signal using the signals converted into the voltage, a low pass filter 105 for reducing noise in the input focus error signal, a gain controller 106 for controlling the gain of a control system, a multiplier 107 for multiplying the input signal by a predetermined constant, a divider 108 for dividing the input signal by the sum signal, a phase compensating portion 109 for raising the phase margin of a control system, a focus search controller 110 for determining whether a focus controlling loop should be turned on, a switching portion 111 for switching the input signal, a driver 112 for converting the input voltage into a current, and a focus actuator 113 which is controlled by the input current.

In the first photo detecting portion 101, the four photodiodes are squarely arranged to confirm whether the optical beam is accurately focused on a recording surface of a magnetooptical disk by an object lens. In the present embodiment, four photodiodes A, B, C, and D are used to improve the accuracy of the focus control. The more photodiodes that are used for comparison, the more accurate the control becomes, however, costs increase as well.

In the second photo detecting portion 102, two photodiodes α and β are arranged next to each other, parallel to the tracks of the magnetooptical disk, to confirm whether the photodiodes move to the track which is desired by a track actuator. This is for correctly controlling the track. Here, at least two photo diodes should be used. In this case, accuracy is not proportionally improved with respect to increased costs of more photodiodes, unlike in the case of the first photo detecting portion 101 for confirming the focus.

The photodiodes of the first and second photo detecting portions 101 and 102 have characteristics of converting the detected optical signal into current signals proportional to the magnitude of the optical signal and outputting the same.

The current-to-voltage converter portion 103 receives the output currents of the first and second photo detecting portions 101 and 102 and converts the same into voltage signals.

In the operator 104, the voltage output from the current-to-voltage converter portion 103 is divided into two symmetrical parts and a focus error signal operated by a subtraction of the two signals is output.

Namely, the operator 104 generates a first operating signal in which the output voltages of the current-to-voltage converters 103A and 103B corresponding to the photodiodes A and B are added among the voltage signals corresponding to the optical signal detected in the photodiodes A, B, C, and D and a second operating signal in which the output voltages of the current-to-voltage converters 103C and 103D corresponding to the two photodiodes C and D located symmetrical to the photodiodes A and B are added. Then, the operator 104 generates a focus error signal by subtracting the second operating signal from the first operating signal. Also, the operator 104 generates a third operating signal by adding the output voltages of the current-to-voltage converters 103E and 103F corresponding to the photodiodes α and β in the second photo detecting portion 102. Then, the operating portion 104 generates a sum signal by adding the first, second, and third operating signals.

At least two photodiodes which detect the optical signals of the magnetooptical disk generate the currents corresponding to the quantity of the detected light. The current signals become the focus error signal when the difference in voltages of the two signals are operated on symmetrically dividing the signals into two parts to confirm the degree of departing from focus after being converted into a voltage signal.

The low pass filter 105 reduces high frequency noises from the input focus error signal and outputs a filtered error signal.

The gain controller 106 receives the filtered error signal, controls the gain thereof to be appropriate for a servo controlling device, and outputs the same.
The gain controller 106 controls the gain of the controlling device within a stable range.

The multiplier 107 receives the gain-controlled focus error signal and multiplies the same by a predetermined constant, and outputs a multiplied signal.

The divider 108 divides the multiplied focus error signal from the multiplier by the sum signal. Here, the sum signal in which the current signals corresponding to the quantity of the light detected by the photodiode are converted into voltage signals and all the converted voltage signals are added is the output signal of the operator 104.

The phase compensating portion 109 receives the output of the divider 108 and performs phase compensation to obtain a stable frequency range which is stable in the characteristics of the focus actuator 113 of a pickup device.

A focus search controller 110 receives the output of the phase compensating portion 109 and determines at which point in time the focus controlling loop should be turned on.

The above focus error signal has the characteristic of being proportional to the area of the recording surface departed from the focus of the laser beam.

The focus search controller 110 turns on the focus controlling loop to perform detailed control of the focus when the focus error signal is in the range of a middle value after searching for minimum and maximum values of the focus error signal, moving the focus actuator 113 up and down. At this time, the range of middle values which turns on the focus control can vary according to the characteristics of the controlling device.

In an embodiment of the present invention, the focus controlling loop is turned on when the focus error signal is in a range of 50% of the difference between the minimum and maximum values and turned off when it exceeds 50% and is controlled by the focus search controller 110.

The focus search controller 110 intercepts the transmission of the output of the phase compensating portion 109 to the driver 112 and moves the focus actuator 113 to be in the range of middle values, as discussed previously, using the search output of the focus search controller 110 when the output of the phase compensating portion 109 exceeds 50% of the difference between the minimum and maximum values.

The switching portion 111 determines whether the output of the phase compensating portion 109 is output to the driver 112 or the search output of the focus search controller 110 is output to the driver 112 after determining whether the output signal of the phase compensating portion 109 is in the range of middle values in the focus search controller 110.

Namely, the switching portion 111 outputs the output of the phase compensating portion 109 to the driver 112 and turns on the focus controlling loop when the focus error signal is in the range of middle values according to the determination of the focus search controller 110.

However, if the focus error signal exceeds the range of middle values, the application of the output of the phase compensating portion 109 to the driver 112 is intercepted and the focus controlling loop is turned off so as to have the search output of the focus search controller 110 applied to the driver 112.

The focus controlling loop is turned on when the focus error signal is within the range of middle values by controlling the focus actuator 113 using the search output of the focus search controller 110 in a state in which the focus controlling loop is turned off.

The driver 112 outputs the voltage converted into a current to generate a torque required for driving the focus actuator 113 by inputting the output of the switching portion 111.

The focus actuator 113 receives the output of the driver 112 and sets the focus.

By doing so, the described embodiment reduces the change of gain of the control system as follows, even when the amount of the light detected in the photo detecting portion changes.

If the amount of the light detected by the photodiode of the photo detecting portion increases, the focus error signal increases in proportion to the increase in the amount of light. Accordingly, the value of the focus error signal multiplied by a predetermined constant increases. The sum signal also increases and the increase in the sum signal gets larger than that of the focus error signal. When the constant value of the multiplying portion 107 is set to make an increase factor of the focus error signal multiplied by the constant which is a numerator of a dividing process in the divider 108 similar to that of the sum signal which is a denominator, the change of gain of the control system according to the change in the amount of light detected can be reduced when compared to a conventional controlling device.

If the amount of detected light is reduced, there would be a reverse effect. Namely, since a decrease factor of the focus error signal multiplied by the constant which is a numerator of the dividing process becomes similar to that of the sum signal which is a denominator during the dividing process in the divider 108, the change of gain of the control system according to the change in the amount of the light detected can be reduced compared to that of the conventional controlling device.

As mentioned above, the controlling device maintains a uniform gain regardless of a change in the amount of light detected in the photo detecting portion.

Figure 2 is a block diagram schematically illustrating a magnetooptical disk tracking servo, which is stable with changing quantities of light. The tracking servo includes a first photo detecting portion 201 having at least two sets of photodiodes (A-D) for detecting an optical signal required for operating a sum signal and a focus error signal, a second photo detecting portion 202 having at least two photodiodes (α and β) for detecting the optical signal required for operating the sum signal, a current-to-voltage converter portion 203 for converting the received current into a voltage, an operator 204 for calculating the focus error signal and the sum signal using the signals converted into the voltage, a low pass filter 205 for reducing noise in the received focus error signal, a gain controller 206 for controlling the gain of the control system, a multiplier 207 for multiplying the received signal by a predetermined constant, a divider 208 for dividing the received signal by the sum signal, a phase compensating portion 209 for raising the phase margin of the control system, a track jump controller 210 for determining the track jump, a switching portion 211 for switching the received signal, a driver 212 for converting the received voltage into a current, and a track actuator 213 which is controlled by the received current.

In the first photo detecting portion 201, the four photodiodes A, B, C, and D are squarely arranged to confirm whether the optical beam is accurately focused on a recording surface of the magnetooptical disk by an object lens. In the present embodiment, four photodiodes A, B, C, and D are used to improve the accuracy of the focus control.

In the second photo detecting portion 202, two photodiodes α and β are arranged next to each other, perpendicular to the tracks of the magnetooptical disk, to confirm whether the photodiodes move to the desired track by the track actuator. Here, at least two photo diodes should be used. In this case, accuracy does not proportionally improve with respect to the increased costs of more photodiodes, unlike in the case of the first photo detecting portion 201 for confirming the focus.

The photodiodes of the first and second photo detecting portions 201 and 202 have characteristics of converting the detected optical signal into a current proportional to the magnitude of the optical signal.

The current-to-voltage converting portion 203 receives the output currents of the first and second photo detecting portions 201 and 202 and converts the same into voltage signals.

In the operator 204, the voltage output from the current-to-voltage converter 203 is symmetrically divided into two parts and a tracking error signal and a sum signal as follows.

Namely, the operator 204 generates a first operating signal in which the output voltages of the current-to-voltage converters 203A and 203B corresponding to the photodiodes A and B are added among the voltage signals corresponding to the optical signal detected in the photodiodes A, B, C, and D and a second operating signal in which the output voltages of the current-to-voltage converters 203C and 203D corresponding to of the two photodiodes C and D located symmetrical to the photodiodes A and B are added.

The operator 204 generates a third operating signal by adding the output voltages of the current-to-voltage converters 203E and 203F corresponding to the photodiodes α and β of the second photo detecting portion 202 and the tracking error signal by operating the subtraction of the two voltages. Then, the operator 204 generates a sum signal by adding the first, second, and third operating signals of the first and second photo detecting portions 201 and 202.

The tracking error signal in the present invention is the signal divided into two parts in which the difference in the voltages of the two signals is operated on to confirm the degree of departure of the photodiode receiving the reflected light from the track of the magnetooptical disk.

The low pass filter 205 reduces high frequency noise in the tracking error signal and outputs a filtered error signal.

The gain controller 206 receives the filtered error signal, controls the gain thereof to be appropriate for a servo controlling device, and outputs the same. Namely, the gain controlling portion 206 controls the gain of the controlling device within a stable operating range of the control system.

The multiplier 207 receives the gain-controlled tracking error signal, multiplies the same by a predetermined constant times and outputs a multiplied signal.

The divider 208 divides the multiplied tracking error signal from the multiplier 207 by the sum signal.

The phase compensating portion 209 performs phase compensation to secure a frequency range which is stable in the characteristics of the track actuator 213 of the pickup device on the output of the divider 208.

A track jump controlling portion 210 makes the driving body of the second photo detecting portion 202 jump a track to detect optical signals of a desired track by a control signal input from the user. The track jump controller 210 also moves the driving body of the second photo detecting portion 202 sequentially from the inner circumference of the disk to the outer circumference thereof. The track jump controller 210 determines whether a current track will be continuously repetitively reproduced to generate a track jump drive voltage corresponding thereto. When the driving body jumps a track, the switching portion 211 prevents the output of the phase compensating portion 209 from being output to the driver 212 and supplies a track jump driving voltage to the driver 212.

The switching portion 211 selects one of the output of the phase compensating portion 209 and the track jump controlling output by a jump control signal which is received from an external source to the track jump controller 210. Therefore, the switching portion 211 applies the output signal of the phase compensating portion 209 to the driver 212 when the track jump control signal by the outer user is not received. The switching portion 211 applies the output signal of the track jump controller 210 to the driver 212 when a track jump is determined by the track jump controller 210.

The driver 212 outputs a voltage converted into a current of the switched output signal to generate the torque required to drive the track actuator 213.

The track actuator 213 controls the photo detecting portion to reduce the magnitude of the track error signal by the controlled current signal and moves the photo detecting portion accurately over the track of the magnetooptical disk.

Figure 3 is a block diagram schematically illustrating a magnetooptical disk servo, which is stable with changing quantities of light, according to the present invention, the servo device includes a first photo detecting portion 301 having at least two sets of photodiodes (A-D) for detecting the optical signal required for operating a sum signal and a focus error signal, a second photo detecting portion 302 having at least two photodiodes (α and β) for detecting the optical signal required for operating the sum signal and a tracking error signal, a current-to-voltage converting portion 303 for converting the current received from the photo detecting portions into a voltage, an operator 304 for generating the sum signal, the focus error signal and the tracking error signal using the total of the voltage-converted signals, a first low pass filter 305 for reducing noise in the focus error signal, a first gain controller 306 for controlling the gain of the control system, a first multiplier 307 for multiplying the received signal by a predetermined constant, a first divider 308 for dividing the received signal by the sum signal, a first phase compensating portion 309 for raising the phase margin of the control system, a focus search controller 310 for determining whether the focus controlling loop should be turned on, a first switching portion 311 for switching the input signal, a first driver 312 for converting the received voltage into a current, and a focus actuator 313 for performing control by the input current, a second low pass filter 314 for reducing noise in the tracking error signal, a second gain controller 315 for controlling the gain of the control system, a second multiplier 316 for multiplying the input signal by a predetermined constant, a second divider 317 for dividing the input signal by the sum signal, a second phase compensating portion 318 for raising the phase margin of the control system, a track jump controller 319 for determining whether a track jump is to be performed or not, a second switching portion 320 for switching the input signal according to the switching signal, a second driver 321 for converting the received voltage to a current, and a track actuator 322 for performing the control by the input current.

In the first photo detecting portion 301, the four photodiodes A, B, C, and D are squarely arranged to confirm whether optical signal is accurately focused on the recording surface of the magnetooptical disk by the object lens. In the present embodiment, four photodiodes are used to improve the accuracy of the focus control. Here, as many photodiodes are used, the accuracy of the control increases, however, cost also increases.

In the second photo detecting portion 302, two photodiodes α and β are arranged next to each other, perpendicular to tracks of the magnetooptical disk, to confirm proper movement of the photodiodes to desired tracks by the track actuator. At least two photodiodes should be used, however, accuracy is not remarkably improved in relation to increase in costs, unlike in the case of the first photo detecting portion 301.

The photodiodes of the first and second photo detecting portions 301 and 302 have characteristics of converting the detected optical signal into current signals proportional to the magnitude of the optical signal and outputting the same.

The current-to-voltage converter portion 303 receives the currents from the first and second photo detecting portions 301 and 302 and converts the same into voltage signals.

In the operator 304, the voltage received from the current-to-voltage converter 303 is symmetrically divided into two parts and the focus error signal operated on by subtracting the two signals is output. Namely, the operator 304 generates a first operating signal in which the output voltages of the current-to-voltage converters 303A and 303B corresponding to the photodiodes A and B among the optical signal detected in the photodiodes A, B, C, and D are added and a second operating signal in which the output voltages of the current-to-voltage converters 303C and 303D corresponding to the two photodiodes C and D located symmetrical to the photodiodes A and B are added. Then, the operator 304 generates a focus error signal by subtracting the second operating signal from the first operating signal. Also, the operator 304 generates a third operating signal by adding the output voltages of the current-to-voltage converters 303E and 303F corresponding to the photodiodes α and β of the second photo detecting portion 302. Then, the operator 304 generates a sum signal by adding the first, second, and third operating signals.

Namely, at least two photodiodes which detect the optical signals of the magnetooptical disk generate the currents corresponding to the amount of detected light. The current signals become the focus error signal when the difference in voltages of the two signals are operated on by being symmetrically divided into two parts to confirm the degree of departure from focus after being converted into a voltage signal.

The first low pass filter 305 reduces high frequency noise in the focus error signal.

The first gain controller 306 receives the filtered focus error signal, controls the gain thereof which is appropriate for the servo device, and outputs the same. Namely, the first gain controller 306 controls the gain of the controlling device to be within a stable range.

The first multiplier 307 receives the gain-controlled focus error signal and multiplies the same by a predetermined constant, and outputs a multiplied signal.

The divider 308 divides the multiplied focus error signal from the multiplier by the sum signal. Here, the sum signal is the output signal of the operator 304 in which the current signals corresponding to the amount of light detected in the photodiode are converted into the voltage signals and all the converted voltage signals are added.

The first phase compensating portion 309 receives the output of the first divider 308 and performs phase compensation to secure a frequency range which is stable in the characteristics of the focus actuator 313 of the pickup device.

The focus search controller 310 determines at which point in time the focus controlling loop should be turned on.

The above focus error signal has the characteristic of being proportional to the degree of departure of the laser beam from the desired focus on the recording surface of the magnetooptical disk.

The focus search controller 310 turns on the focus controlling loop to perform detailed control of the focus when the focus error signal is in the range of a middle value after searching for minimum and maximum values of the focus error signal, moving the focus actuator 313 up and down. At this time, the range of the middle values which turns on the focus control can vary according to the characteristics of the controlling device.

In the present embodiment of the present invention, the focus controlling loop is turned on when focus controlling error signal is in a range of 50% of the subtraction of the minimum and maximum values and turned off when it exceeds 50% and is controlled by the focus search controller 310.

Namely, the focus search controller 310 intercepts the transmission of the output of the phase compensating portion 309 to the first driver 312 and moves the focus actuator 313 to be in the range of middle values, as discussed previously, using the search output of the focus search controller 310 when the output of the phase compensating portion 309 exceeds 50% of the difference between the minimum and maximum values.

The first switching portion 311 determines whether the output of the phase compensating portion 309 is output to the first driver 312 or the search output of the focus search controller 310 is output to the first driver 312 after determining whether the output signal of the phase compensating portion 309 is in the range of middle values in the focus search controller 310.

Namely, the first switching portion 311 outputs the output of the first phase compensating portion 309 to the first driver 312 and turns on the focus controlling loop when the focus error signal is in the range of middle values according to the determination of the focus search controller 310.

However, if the focus error signal exceeds the range of middle values, the application of the first phase compensating portion 309 to the driver is intercepted and the focus controlling loop is turned off so as to have the search output of the focus search controller 310 applied to the first driver 312.

The focus controlling loop is turned on when the focus error signal is within the range of middle values by controlling the focus actuator 313 using the search output of the focus search controller 310 in a state in which the focus controlling loop is turned off.

The first driver 312 outputs the voltage converted into a current to generate a torque required for driving the focus actuator 313.

The focus actuator 313 receives the output of the first driver 312 and sets the focus.

By doing so, the present invention reduces the change of gain of the control system as follows, even when the amount of light detected in the photo detecting portion changes.

If the amount of light detected by the photodiode of the photo detecting portion increases, the focus error signal increases in proportion to increase in the amount of light detected. Accordingly, the value of the focus error signal multiplied by the predetermined constant increases.

The sum signal also increases and the increase in the sum signal gets larger than that of the focus error signal. When the constant value of the multiplier 307 is set to make an increase factor of the focus error signal multiplied by the constant which is the numerator of a dividing process in the divider 308 similar to that of the sum signal which is a denominator, the change of gain of the control system according to the change in the amount of light detected can be reduced compared to a conventional controlling device.

If the amount of detected light is reduced, there would be an opposite effect. Namely, since a decrease factor of the focus error signal multiplied by the constant which is the numerator of the dividing process becomes similar to that of the sum signal which is the denominator during the dividing process in the divider 308, the change of gain of the control system according to the change in the amount of light detected can be reduced compared to that of the conventional controlling device.

The second low pass filter 314 reduces high frequency noise in the tracking error signal and outputs a filtered tracking error signal.

The second gain controller 315 controls the filtered tracking error signal to a gain appropriate for the servo controlling device.

The second multiplier 316 multiplies the gain-controlled tracking error signal by a predetermined constant and outputs a multiplied signal.

The second divider 317 divides multiplied signal by the sum signal.

The second phase compensating portion 318 performs phase compensation to secure a frequency range which is stable in the track actuator 322 of the pickup device.

The track jump controller 319 moves the driving body of the second photo detecting portion 302 for detecting the optical signal to a desired track by the controlling signal which is input by the user, then jumps from an inner track to an outer track of the disk, or selects whether the present track is repeatedly reproduced or not and generates the track jump driving voltage corresponding thereto.

When the driving body moves to another track, the second switching portion 320 prevents the output of the second phase compensating portion 318 from being output to the second driver 321 and supplies a track jump driving voltage to the second driver 321.

Namely, the second switching portion 320 applies the output signal of the second phase compensating portion 318 to the second driver 321 when the track jump controlling signal is not input by the user. The second switching portion 320 applies the output signal of the track jump controller 319 to the second driver 321 when a track jump is performed by the track jump controller 319.

The second driver 321 outputs a voltage converted to a current of the switched output signal to the track actuator 322 to generate the torque required for driving the track actuator 322.

The track actuator 322 controls the photo detecting portion to reduce the magnitude of the track error signal by the controlled current signal and moves the photo detecting portion accurately over the track of the magnetooptical disk.

By doing so, the present invention reduces the change of gain of the control system as follows, even when the amount of light detected in the photo detecting portion changes.

If the amount of light detected in the photodiode of the photo detecting portion increases, the tracking error signal increases proportional to the increase in the amount of light detected. The sum signal also increases and the increase thereof is greater than that of the tracking error signal. When the amplification factor of the constant value of the multiplier 207 is set to make the increase factor of the tracking error signal multiplied by the constant which is a numerator value of a dividing process in the divider 317 similar to that of the sum signal which is a denominator, the change of gain of the control system according to the change in the amount of light detected can be reduced compared with a conventional controlling method.

If the amount of detected light is reduced, the reverse would occur. Namely, since the decrease factor of the tracking error signal multiplied by the constant which is a numerator value of the dividing process becomes similar to that of the sum signal which is a denominator during the dividing process in the divider 317, the change of gain of the control system according to the change in the amount of light detected can be reduced compared with the conventional controlling device.

By doing so, the present invention reduces the change of gain of the control system as follows even though the amount of light detected in the photo detecting portion changes.

If the amount of light detected in the photodiode of the photo detecting portion increases, the tracking error signal increases proportional to the increase in the amount of light detected. Accordingly, the value of the tracking error signal multiplied by a predetermined constant increases. The sum signal also increases and increase thereof is greater than that of the tracking error signal. When the amplification factor of the constant value of the multiplier 207 is set to make the increase factor of the tracking error signal multiplied by the constant which is a numerator value of a dividing process in the divider 208 similar to that of the sum signal which is a denominator, the change of gain of the control system according to the change in the amount of light detected can be reduced compared with a conventional controlling method.

If the amount of detected light is reduced, the reverse would occur. Namely, since the decrease factor of the tracking error signal multiplied by the constant which is a numerator value of the dividing process becomes similar to that of the sum signal which is a denominator during the dividing process in the divider 208, the change of gain of the control system according to the change in the amount of light detected can be reduced compared with the conventional controlling device.

As mentioned above, the control system according to the present invention can maintain uniform gain regardless of a change in the amount of light detected to the pickup portion.

As described above, according to the present invention, it is possible to prevent the oscillation of the magnetooptical disk focus and tracking servo device and stabilize the control system by maintaining a uniform gain of the control system of the focus and tracking servo device, even when the amount of light detected in the photodiodes of the photo detecting portion changes.

## Claims

1. A magnetooptical disk servo device, which is stable with changing amounts of light detected, and which performs a focus servo control using a focus error signal operated on by an output of a first photo detecting portion (301) including a plurality of photodiodes (A-D) the device comprising:
an operator (304) for outputting a sum signal by adding signals corresponding to the amount of light detected in at least two photodiodes among said plurality of photodiodes of said first photo detecting portion and for outputting a tracking error signal by subtracting signals corresponding to the amount of light detected in at least two photodiodes α, β of a second photo detecting system (302);
a first divider (308) for dividing said focus error signal by said sum signal; and
a focus servo (310, 311, 312) for controlling a focus actuator (313) with the output of said divider (308);
a second divider (317) for dividing said tracking error signal by said sum signal; and
a tracking servo (319, 320, 321) for controlling a tracking actuator (322) with the output of said divider (317); **characterised in that** there is included
a first gain controller (306) for controlling the gain of the focus error signal before dividing the focus error signal in the first divider, and
a second gain controller (315) for controlling the gain of the tracking error signal before dividing the tracking error signal in the second divider.

2. A focus servo device as claimed in claim 1, further comprising multipliers (307, 316) for multiplying said gain-controlled focus error signal and said gain-controlled tracking error signal by a constant before dividing said focus error signal and said tracking error signal respectively in said respective dividers (308, 317).

## Patentansprüche

1. Servovorrichtung für magnetooptische Platten, die bei sich ändernden erfassten Lichtmengen stabil ist und die eine Fokus-Servosteuerung unter Verwendung eines Fokus-Fehlersignals ausführt, auf das ein Ausgang eines ersten Lichterfassungsabschnitts (301) einwirkt, der eine Vielzahl von Fotodioden (A-D) enthält, wobei die Vorrichtung umfasst:
einen Operator (304), der ein Summensignal ausgibt, indem er Signale addiert, die der in wenigstens zwei Fotodioden unter der Vielzahl von Fotodioden des ersten Lichterfassungsabschnitts erfassten Lichtmenge entsprechen, und ein Spurführungs-Fehlersignal ausgibt, indem er Signale subtrahiert, die der in wenigstens zwei Fotodioden α, β eines zweiten Lichterfassungssystem (302) erfassten Lichtmenge entsprechen;
einen ersten Dividierer (308), der das Fokus-Fehlersignal durch das Summensignal dividiert; und
eine Fokus-Servoeinrichtung (310, 311, 312), die ein Fokus-Stellglied (313) mit dem Ausgang des Dividierers (308) steuert;
einen zweiten Dividierer (317), der das Spurführungs-Fehlersignal durch das Summensignal dividiert; und
eine Spurführungs-Servoeinrichtung (319, 320, 321), die ein Spurführungs-Stellglied (322) mit dem Ausgang des Dividierers (317) steuert;
**dadurch gekennzeichnet, dass** enthalten sind:
eine erste Verstärkungs-Steuerung (306), die die Verstärkung des Fokus-Fehlersignals steuert, bevor das Fokus-Fehlersignal in dem ersten Dividierer dividiert wird, und
eine zweite Verstärkungs-Steuerung (315), die die Verstärkung des Spurführungs-Fehlersignals steuert, bevor das Spurführungs-Fehlersignal in dem zweiten Dividierer dividiert wird.

2. Fokus-Servovorrichtung nach Anspruch 1, die des Weiteren Multiplizierer (307, 316) umfasst, die das verstärkungsgesteuerte Fokus-Fehlersignal und das verstärkungsgesteuerte Spurführungs-Fehlersignal mit einer Konstanten multiplizieren, bevor das Fokus-Fehlersignal und das Spurführungs-Fehlersignal in den entsprechenden Dividierem (308, 317) dividiert werden.

## Revendications

1. Dispositif d'asservissement de disque magnéto-optique, qui est stable suivant un changement de quantités de lumière détectée, et qui effectue une commande d'asservissement de focalisation en utilisant un signal d'erreur de focalisation traité par une sortie d'une première partie photodétectrice (301) incluant une pluralité de photodiodes (A à D), le dispositif comportant :
un opérateur (304) pour délivrer en sortie un signal de somme en additionnant des signaux correspondant à la quantité de lumière détectée dans au moins deux photodiodes parmi ladite pluralité de photodiodes de ladite première partie photodétectrice et pour délivrer en sortie un signal d'erreur de suivi de piste en soustrayant des signaux correspondant à la quantité de lumière détectée dans au moins deux photodiodes α, β d'un second système photodétecteur (302),
un premier diviseur (308) pour diviser ledit signal d'erreur de focalisation par ledit signal de somme, et
un asservisseur de focalisation (310, 311, 312) pour commander un actionneur de focalisation (313) à l'aide de la sortie dudit diviseur (308),
un second diviseur (317) pour diviser ledit signal d'erreur de suivi de piste par ledit signal de somme, et
un asservisseur de suivi de piste (319, 320, 321) pour commander un actionneur de suivi de piste (322) à l'aide de la sortie dudit diviseur (317), **caractérisé en ce qu'**il inclut
un premier contrôleur de gain (306) pour commander le gain du signal d'erreur de focalisation avant de diviser le signal d'erreur de focalisation dans le premier diviseur, et
un second contrôleur de gain (315) pour commander le gain du signal d'erreur de suivi de piste avant de diviser le signal d'erreur de suivi de piste dans le second diviseur.

2. Dispositif d'asservissement de focalisation selon la revendication 1, comportant en outre des multiplicateurs (307, 316) pour multiplier ledit signal d'erreur de focalisation ayant subi une commande de gain et ledit signal d'erreur de suivi de piste ayant subi une commande de gain par une constante avant de diviser ledit signal d'erreur de focalisation et ledit signal d'erreur de suivi de piste respectivement dans lesdits diviseurs (308, 317) respectifs.
